# EUROPEAN PATENT SPECIFICATION

(11) **EP 0 402 977 B1**
(45) Date of publication and mention of the grant of the patent: **18.08.1993**
(21) Application number: 90201385.3
(22) Date of filing: 31.05.1990
(51) Int. Cl.: G01P 5/12, G01P 13/02

(54) **Device for determining the speed and direction of a flowing medium**
Einrichtung zum Bestimmen der Geschwindigkeit und der Richtung eines fliessenden Mediums
Dispositif pour la détermination de la vitesse et la direction d'un médium courant

(30) Priority: 13.06.1989 NL 8901500
(43) Date of publication of application: 19.12.1990
(73) Proprietor: BRONKHORST HIGH-TECH B.V., NL-7261 AK Ruurlo (NL)
(72) Inventor: Van Oudheusden, Bastiaan Willem, NL-2628 TB Delft (NL); Huijsing, Johan Hendrik, NL-2636 HD Schipluiden (NL)
(74) Representative: Flamman, Han

(56) References cited:
- EP-A- 0 313 120
- GB-A- 1 488 012
- US-A- 2 496 339
- US-A- 3 881 350

## Description

The invention relates to a device for measuring the speed and the flow-direction of a flowing medium, consisting of a cylinder-shaped shaft, supporting a construction of an upper and a lower, mutually almost identical circular disc, fixed at a certain distance from one another, perpendicular to a common axis, this axis preferably being more or less perpendicular to the plane of the flow of the medium which in use flows between the discs and preferably coinciding with the shafts' axis. This construction contains a direction-sensitive thermic speedometer, with its sensitive side directed to the upper circular disc.

The shaft is extended through the lower circular disc and at its end, at least about halfway the two circular discs, the shaft is provided with a third circular disc, perpendicular to the axis of the shaft, having a diameter, smaller than that of the other circular discs, and on which, in the center of its top surface the speedometer is positioned

A meter for measuring the direction of the flow, is known from the American patent 2.496.339, particularly Fig.7, in which the bottom disc is heated in comparison to the medium, the flow being led over three thermic converters, put at 120° around the axis on the bottom disc, which converters are cooled irregularly, after which the ratio of the output tensions is used to determine the direction of the medium.

The device according to the invention shows a simple construction with only one converter, not only measuring the direction of the flow, but also its speed. An advantage is also that not the whole disc needs to be heated, but only the speedometer, so that in order to get a similar rise in temperature, considerably less electrical power is needed. Also the number of measuring points is reduced from three to one, which improves the accuracy of the measurement, because differences in flow between different measuring points can no longer occur.

A further advantage of the device according to the invention is, that for the third circular disc on which the flow meter is situated, the dependency on the angle of the flow, that is the deviation of the flow-direction with regard to the plane of the discs, is smaller than for the lower and upper circular disc, because the flow is already bent away before it reaches the third disc, so that the medium is led over the flowrate-meter more evenly. Consequently the 'local flow' - i.e. the flow over the third disc, very much resembles the flow outside the device, which results in very accurate measuring-data.

In the European Patent Application no. 0 313 120, also a device for measuring the flow-rate in a direction-sensitive way is described. However no indication is given as to how to realise a construction in which on the spot where the measurements take place, the 'local' flow to a very high degree reflects the flow of the medium 'outside'. As goes from the foregoing, this is what is achieved in the device according to the invention.

According to a preferred embodiment of the device according to the invention, the edge of the third circular disc is rounded off, preferably semicircular. This has the advantage that flow deviations and eddying, which may easily occur because of sharp corners at the edges of that disc and which disturb the flow-pattern, to a large extent can be avoided.

According to another characteristic of the device according to the invention, the cross-section of the third disc is mostly elliptical. Thus it is attained that flow deviation is avoided even more, as the flow is led over the flowrate-meter even better.

According to a further characteristic of the device according to the invention, the lower and the upper circular disc are connected by distance-pieces, distributed regularly along the circumference.

According to yet another characteristic of the device according to the invention, the lower and the upper circular disc are connected by a cylinder of wire netting. The advantage of this is, that deviations in the flow-pattern over the speedometer at certain angles of the flow are suppressed even further, the wire netting at the same time promoting a smooth, even flow over the speedometer.

The above will be explained at the hand the accompanying figures, showing an example of a device according to the invention, in which:
- Fig. 1: shows an embodiment of a flowrate-meter with three discs;
- Fig. 2: shows a meter with a third disc with a semicircular edge;
- Fig. 3: shows a third disc, of which the cross-section is elliptical, and
- Fig. 4: shows an embodiment of the device with a cylinder of wire netting as a connection piece between lower first and the upper disc.

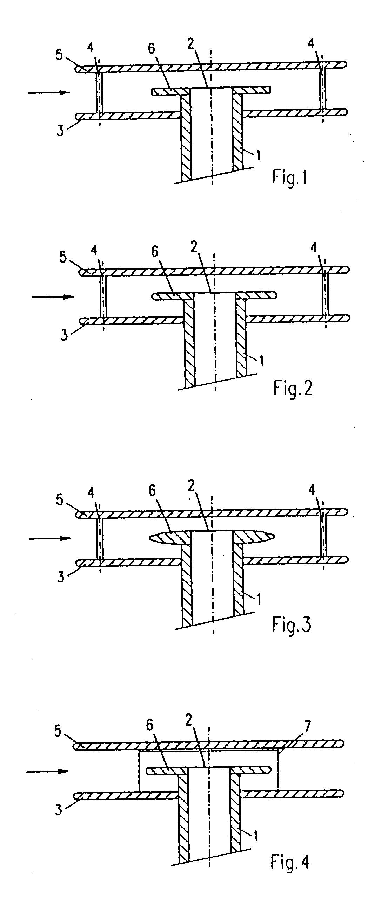

In Fig.1, a shaft 1 extends through a lower circular disc 3. An upper circular disc 5 of the same diameter, and moved axially with regard to disc 3, is attached to the disc 3 by connecting pieces 4. This shaft 1 is hollow, and contains the electrical wires for the direction-sensitive flowrate meter 2, which is situated on top of the shaft 1, in the center of a third disc 6, which is situated on top of the shaft 1. The diameter of the third disc 6 is smaller than that of the discs 3 and 5.

The flowrate-meter 2 preferably consists of a semiconductor substrate, heated by a resistor element, on which substrate thermocouples are situated, the contact points of which an cooled unequally by a medium, in the liquid or gaseous phase, which flows between the two circular discs 3 and 5. Thus the direction and the speed of the flowing medium may be measured accurately by the direction-sensitive flowmeter 2: the rate of cooling is a measure for the said speed and direction. Because discs 3 and 5 bend the flow into the plane of the discs before it reaches the third circular disc 6, the dependence on the angle of the flowing medium and on the influence of eddying around the cylinder-shaped shaft 1 for the flow over the top surface of the third circular disc 6 and, therefore, for the flow over the speedometer 2, is smaller than is the case in a construction where there is no third disc 6 and where the meter 2 is situated in the plane of the lower disc 3.

Fig. 2 shows an embodiment in which the edge of the third circular disc 6 is of a semi-circular form. Thus the eddying at the edge, which disturb the smoothness of the flow, is diminished greatly or is even totally avoided.

In Fig. 3, the cross-section of the circular third disc 6 is elliptical, because of which the flow becomes even more smooth.

In Fig. 4, the distance pieces 4, which may consist of thin bars or thin, streamlined fins, radially directed inwards, are replaced by a cylinder of wire netting 7. This results in that for any direction in which the flow enters, the flow-pattern over the flowrate-meter 2 is identical, because the disturbing influence of the pieces 4, which may occur at certain flow-angles, is totally absent, the wire netting at the same time promoting a smooth, homogeneous flow.

It will be clear that the edges of the lower and the upper disc 3 and 5 can also be rounded off.

## Claims

1. Device for measuring the speed and the flow-direction of a flowing medium, consisting of a cylinder-shaped shaft, supporting a construction of an upper and a lower, mutually almost identical circular disc, fixed at a certain distance from one another, perpendicular to a common axis, this axis preferably being more or less perpendicular to the plane of the flow of the medium, which in use flows between the discs and preferably coinciding with the shafts' axis, which construction contains a direction-sensitive thermic speedometer, with its sensitive side directed to the upper circular disc, the shaft being extended through the lower circular disc and at its end, at least about halfway the two circular discs, being provided with a third circular disc, perpendicular to the axis of the shaft, having a diameter, smaller than that of both other discs and on which, in the center of its top surface, the speedometer is positioned.

2. Device according to claim 1,
characterized in that the edge of the third circular disc is round, preferably semicircular.

3. Device according to claim 12,
characterized in that the cross-section of the third disc is, at least mainly, elliptical.

4. Device according to claims 1 till 3,
characterized in that the first and second circular disc are connected by connection pieces, positioned at regular intervals along the perimeter.

5. Device according to claims 1 till 3,
characterized in that the first and second circular disc are connected by means of a cylinder of wire netting.

## Patentansprüche

1. Einrichtung zum Messen der Geschwindigkeit und der Strömungsrichtung eines fließenden Mediums, die aus einem zylinderförmigen Schacht besteht, welcher eine Konstruktion trägt, die aus einer oberen und einer unteren miteinander beinahe identischen kreisförmigen Scheibe besteht, die in einem bestimmten Abstand voneinander senkrecht zu einer gemeinsamen Achse angebracht sind, diese Achse vorzugsweise mehr oder weniger senkrecht zur Strömungsebene des Mediums steht, das bei der Anwendung zwischen den Scheiben strömt und vorzugsweise mit der Schachtachse zusammenfällt, welche Konstruktion einen Richtungs-empfindlichen thermischen Geschwindigkeitsmesser enthält, der mit seiner empfindlichen Seite gegen die obere kreisförmige Scheibe gerichtet ist, der Schacht über die untere kreisförmige Scheibe hinaus verlängert ist und an seinem Ende, zumindest ungefähr auf halbem Wege zwischen den beiden kreisförmigen Scheiben, mit einer dritten kreisförmigen Scheibe versehen ist, die senkrecht zur Schachtachse steht und einen kleineren Durchmesser als die beiden anderen kreisförmigen Scheiben hat, und auf welcher im Zentrum ihrer oberen Fläche der Geschwindigkeitsmesser angebracht ist.

2. Einrichtung gemäß Anspruch 1,
dadurch gekennzeichnet, daß die Kante der dritten kreisförmigen Scheibe rund, vorzugsweise halbkreisförmig ist.

3. Einrichtung gemäß Anspruch 2,
dadurch gekennzeichnet, daß der Querschnitt der dritten Scheibe, wenigstens in der Hauptsache, elliptisch ist.

4. Einrichtung gemäß den Ansprüchen 1 bis 3,
dadurch gekennzeichnet, daß die erste und die zweite kreisförmige Scheibe durch Verbindungsstücke miteinander verbunden sind, die in regelmäßigen Abständen entlang dem Umfang angeordnet sind.

5. Einrichtung gemäß den Ansprüchen 1 bis 3,
dadurch gekennzeichnet, daß die erste und zweite kreisförmige Scheibe mit Hilfe eines Zylinders aus Drahtgeflecht miteinander verbunden sind.

## Revendications

1. Dispositif pour la mesure de la vitesse et de la direction du flux d'un médium circulant, consistant en une tige de forme cylindrique, soutenant une construction formée d'un disque circulaire supérieur et d'un disque circulaire inférieur, quasiment identiques l'un à l'autre, fixés à une certaine distance l'un de l'autre, perpendiculaires à un axe commun, cette axe étant de préférence plus ou moins perpendiculaire au plan du courant du médium, qui circule entre les disques pendant l'utilisation, et coïncidant de préférence avec l'axe de la tige. Cette construction contient un compteur thermique sensible à la direction, sa face sensible étant orientée vers le disque circulaire supérieur, la tige se prolongeant à travers le disque circulaire inférieur et étant munie à son extrémité, au moins à mi-chemin environ des deux disques circulaires, d'un troisième disque circulaire, perpendiculaire à l'axe de la tige, de diamètre plus petit que celui des autres disques circulaires, et sur lequel, au centre de sa surface supérieure, le compteur est positionné.

2. Dispositif d'après la revendication 1,
caractérisé en ce que le bord du troisième disque circulaire est rond, de préférence semi-circulaire.

3. Dispositif d'après la revendication 2,
caractérisé en ce que la coupe transversale du troisième disque est, au moins principalement, elliptique.

4. Dispositif d'après les revendications 1 à 3,
caractérisé en ce que le premier et le deuxième disque circulaire sont connectés par des pièces de connexion, positionnées à intervalles réguliers le long du périmètre.

5. Dispositif d'après les revendications 1 à 3,
caractérisé en ce que le premier et le deuxième disque circulaire sont connectés au moyen d'un rouleau de grillage.
